# EUROPEAN PATENT SPECIFICATION

(11) **EP 1 164 303 B1**
(45) Date of publication and mention of the grant of the patent: **27.10.2004**
(21) Application number: 01203320.5
(22) Date of filing: 09.12.1997
(51) Int. Cl.: F16C 33/10, F16C 33/74

(54) **Dynamic pressure bearing device**
Dynamische Drucklagervorrichtung
Dispositif de palier à pression dynamique

(30) Priority: 10.12.1996 JP 34673896; 10.12.1996 JP 34673996
(43) Date of publication of application: 19.12.2001
(62) Divisional of application: 97309932.8
(73) Proprietor: Seiko Instruments Inc., Chiba-shi, Chiba (JP)
(72) Inventor: Takehara, Isamu, c/o Seiko Instruments Inc., Chiba 261-8507 (JP); Hayashi, Tomohiko, c/o Seiko Seiki K.K., Narashino-shi, Chiba (JP)
(74) Representative: Sorenti, Gino

(56) References cited:
- US-A- 3 420 583
- US-A- 3 484 143
- US-A- 4 445 793
- US-A- 5 433 529
- US-A- 5 504 637
- US-A- 5 533 811
- US-A- 5 543 984
- US-A- 5 658 080

## Description

The present invention relates to a dynamic bearing device used as a bearing for a motor such as a spindle motor.

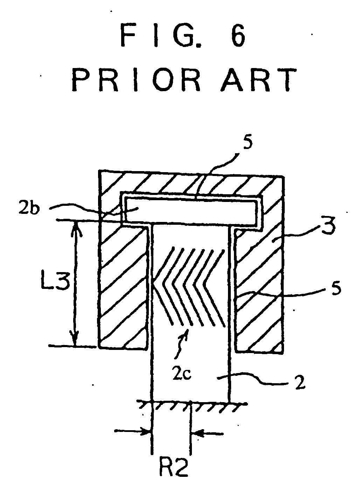

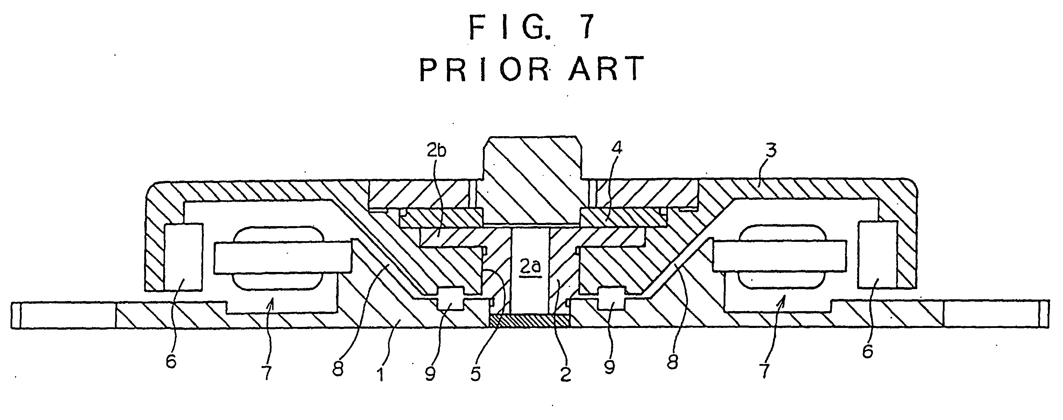

An example of a conventional dynamic bearing device is shown in Figure 6 and Figure 7 hereof.

As shown in figure 6, this type of known dynamic bearing device is composed of a cylindrical radial dynamic pressure bearing 2 and a flange-shape thrust dynamic bearing 2b which follows the radial dynamic pressuere bearing 2. A rotary member 3 is radially supported by the radial dynamic pressure bearing 2, whereas the rotary member 3 is axially supported by the thrust dynamic pressure bearing 2b.

As shown in figure 6, grooves 2c are formed in the circumferential direction of the bearing surface of the radial dynamic bearing 2, whereas grooves (not shown) are also formed in the bearing surface of the thrust dynamic pressure bearing 2b in the same manner. Oil fills the gap 5 between the radial dynamic pressure bearing 2, the thrust dynamic bearing 2b and the rotary member 3.

Further, figure 7 shows the detailed construction of the known dynamic pressure bearing device. As shown in figure 7, the dynamic pressure bearing device has a stationary base 1. A lower potion of a cylindrical radial bearing portion 2 is fitted and fixed to the centre of the stationary base 1. A thrust bearing portion 2b is formed on the upper portion of the radial bearing portion 2.

A rotary member has a bottom rotor 3 and a thrust retaining member 4 which are rotatably supported by the radial bearing portion 2 and the thrust dynamic pressure bearing 2b respectively. An oil retaining gap 5 is formed between the rotary member and the radial bearing portion 2 and between the rotary member and the thrust dynamic pressure bearing 2b.

As shown in Figure 7, a magnet 6 is fixed to an inner circumferential surface of the bottom rotor 3, and a motor is defined between this magnet 6 and a stator 7 formed by windings around an iron core fixed to the side of the stationary base 1.

An annular oil sump 9 is formed between the lower surface of the bottom rotor 3 and the stationary base 1. Sump 9 is in fluid communication with the gap 5, as shown in Figure 7. A space 8 having a central portion slanted upwards and away from the sump 9 in the outward radial direction is formed between the lower surface of the bottom rotor 3 and the upper surface of the stationary base 1.

An oil feed hole 2a is formed along the axial centre of the thrust dynamic pressure bearing 2. Oil is fed from the oil feed hole 2a to the gap 5. Overflow oil from the gap 5 is received into the oil sump 9.

According to the dynamic pressure bearing having such a structure, when the rotary member rotates, due to the viscosity of the oil, the oil is entrained into the narrow portions of the gap 5 and compressed to increase the pressure of the oil. The pressure balances the weight of the rotary member to support the rotary member and to thereby form oil films in the gap 5. Thus, the rotary member is supported in a non-contact state with the radial dynamic pressure bearing 2 and the thrust dynamic pressure bearing 2b by the dynamic pressure generated by the rotation of the rotary member.

As shown in Figure 7, the oil sump 9 is formed between the lower surface of the bottom rotor 3 and the upper surface of the stationary base 1. The space 8 is in fluid communication with the oil sump 9.

Since the vertical width of space 8 is very small, even when the bottom rotor 3 is not rotating, oil is raised to the bottom portion of the space 8, by capillary action.

On the other hand, upon rotation of the bottom rotor 3, since the centrifugal force caused by the rotation is applied to the interior of the space 8, the oil is further raised through the space 8. As a result, there is a risk that the oil will leak from the open end of the space 8.

Further, in the conventional dynamic pressure bearing device shown in Figure 7, in order to miniaturise and reduce the thickness of the rotary member 3, it is necessary to shorten the length of the radial dynamic pressure bearing 2.

However, if the radial dynamic pressure bearing 2 is simply shortened without changing the conventional design, it is impossible to obtain sufficient dynamic pressure in the radial direction of the rotary member 3. It has thus not been possible to meet the requirement for miniaturisation and flatness.

US Patent No. 5543984 on which the preamble of claim 1 is based discloses a fluid bearing comprising a shaft and a cup-shaped member spaced apart so as to define a thrust bearing gap and a radial bearing gap therebetween. Both the thrust bearing gap and a radial bearing gap are filled with a working fluid such as lubricating oil.

An object of the present invention is to provide a dynamic pressure bearing device which may ensure sufficient rigidity when the rotary member is miniaturised and thinned into a flat form.

Accordingly, there is provided a dynamic pressure bearing device comprising a disk fixed to a stationary portion, characterised in that the disk has a top surface which forms a thrust dynamic pressure bearing portion for supporting a rotary member in an axial direction, in that the disk has an outer circumferential surface which forms a radial dynamic pressure portion for supporting said rotary member in a radial direction, and in that the said disk has a bottom surface which forms a thrust dynamic pressure bearing portion for supporting the rotary member in an axial direction and in that a plurality of grooves are formed in said disk bottom surface.

Thus, according to the present invention, it is possible to increase the radial length of the radial dynamic pressure bearing portion in comparison with the conventional bearing. Therefore, even with reduced height it is possible to obtain sufficient rigidity to support the rotary member. Accordingly, in order to miniaturise and flatten the rotary member, it is possible to reduce the overall height of the dynamic pressure bearing to miniaturise the bearing while keeping sufficient rigidity.

Accordingly, there is provided a dynamic pressure bearing device, characterised in that the top surface of said disk has a plurality of grooves formed therein, and the outer circumferential surface of said disk has a plurality of grooves formed therein.

The dynamic pressure bearing device may also be provided with a space in fluid communication with a gap formed between the rotary member and the bearing disk and the stationary portion, the space being formed between the rotary member and a stationary base and having a central portion slanted downwardly in the radially inward direction, characterised in that an opening area of the said space increases in the radially outward direction.

Thus, when the rotary member is not in rotation, the oil within the oil sump is raised to the bottom portion of the said space by capillary action. On the other hand, when the rotary member is in rotation, since the centifugal force caused by the rotation works on the oil within the space, the oil is likely to be further raised in the space.

The opening area of the said space is gradually increased from the central portion in the radial direction. Accordingly, in the space, the force which raises the oil by centifugal force is weakened. Thus, oil within the space is only somewhat raised and there is no risk of leakage to the outside.

It is preferable that the thrust dynamic pressure bearing portions and the radial dynamic pressure bearing portion are bearings of a motor, and that the rotary member is a rotary portion of the motor. Furthermore, it is preferable that the motor is a high speed rotational motor.

A rotary apparatus can be constructed using a spindle motor as a drive means for driving the rotary portion.

Embodiments of the present invention will now be described in more detail, by way of example only and with reference to the accompanying drawings, in which:
Fig. 1 is a cross-sectional view showing a dynamic pressure bearing device according to an embodiment of the present invention as applied to a spindle motor;
Fig. 2 is a front view showing the bearing portion of the embodiment of Figure 1,
Fig. 3 is a plan view showing the bearing portion;
Fig. 4 is a bottom view showing the bearing portion;
Fig. 5 is a cross-sectional view of the primary part thereof;
Fig. 6 is a cross-section view showing a conventional device;
Fig. 7 is a cross-sectional view showing a conventional device; and
Fig. 8 is an external view of a rotary apparatus using a spindle motor.

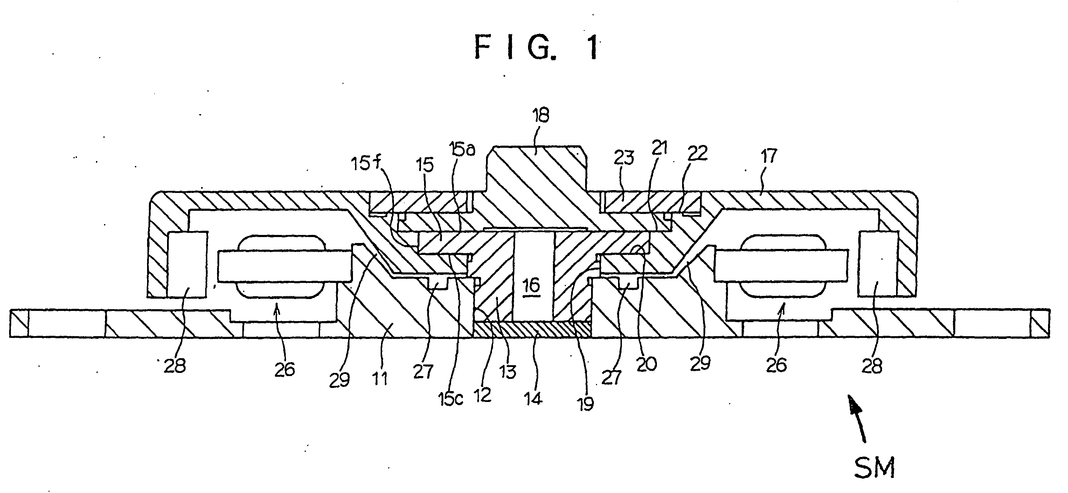

A dynamic pressure bearing device according to a preferred embodiment of the present invention will now be described in detail with reference to Figs. 1 to 5.

Fig. 1 is a cross-sectional view showing the overall structure of the dynamic pressure bearing device according to this embodiment as applied to a spindle motor of high rotational speed.

In this embodiment, as shown in Figure 1, there is provided a stationary base 11. A central hole 12 is formed at the centre of the stationary base 11. A lower portion of a cylindrical stationary shaft 13 is press-fitted into the central hole 12.

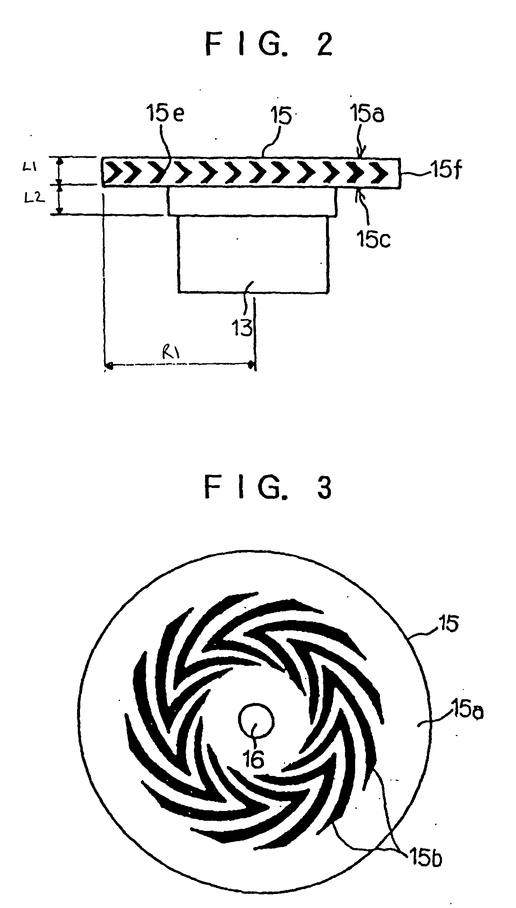

As shown in Figures 1 and 2, a flange disk 15 for the bearing is provided coaxially with the stationary shaft 13 as the upper portion thereof. Although as illustrated, flange disk 15 is formed integrally with the stationary shaft 13, instead the flange disk 15 may be formed discretely from the stationary shaft 13 and may be coupled therewith by suitable means.

An oil feed hole 16 for feeding oil is provided along the axial centre of the inner central portion of the stationary shaft 13. The opening of the oil feed hole 16 may be covered by a sealing cover 14 after charging or replenishment with oil.

An outer circumferential surface of the flange disk 15 is formed as a radial dynamic pressure bearing portion 15f for supporting the rotary member, composed of a bottom rotor 17 and a thrust retaining portion 18, in the radial direction.

As best shown in Figure 2, a plurality of grooves 15e are provided at equal intervals around the circumferential face of the radial dynamic pressure bearing portion 15f. Oil is forcibly introduced into the grooves 15e to generate pressure. As shown in Figure 2, each groove 15e is formed, for example, as a chevron with the downstream ends thereof stopped. In the illustrated arrangement, the width of each of the grooves 15e is substantially equal to the interval between adjacent grooves 15e.

The top and bottom surfaces of the flange disk 15 form thrust dynamic pressure bearing portions 15a and 15c, respectively. These support the rotary member, composed of the bottom rotor 17 and the thrust retaining portion 18 in the axial direction.

As shown in Fig. 3, a plurality of thrust grooves 15b are provided at equal intervals in a circumferential arrangement at a position a predetermined distance away from the centre of the thrust dynamic pressure bearing portion 15a. Oil is forcibly introduced into the grooves to generate pressure. As shown in Figure 3, the width of each thrust groove 15b is substantially equal to the interval between adjacent thrust grooves 15b.

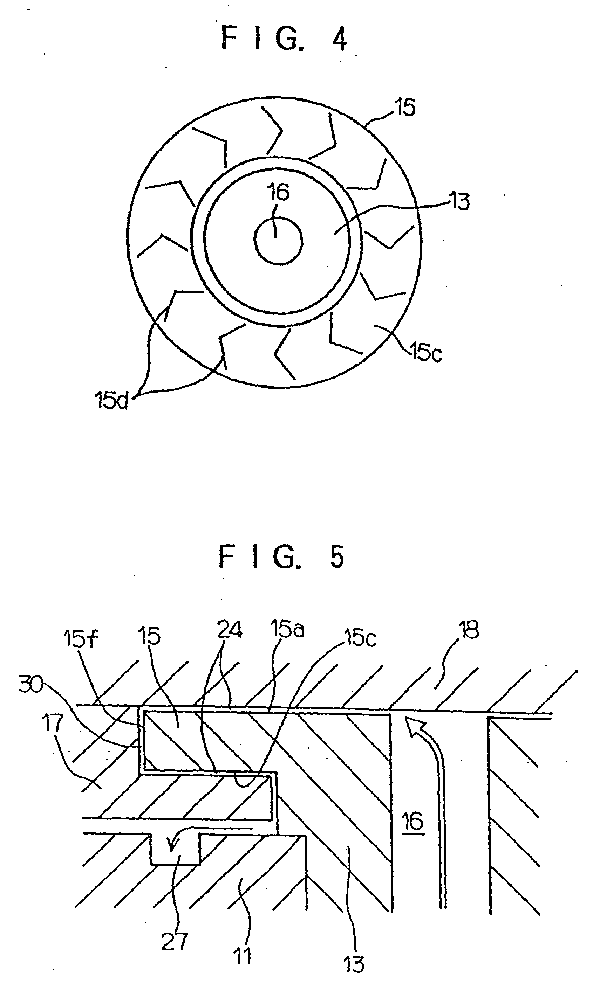

As shown in Figure 4, a plurality of thrust grooves 15d which are substantially the same as the thrust grooves 15b are provided at equal intervals in a circumferential direction at a position a predetermined distance away from the centre of the thrust dynamic pressure bearing portion 15c.

The thrust grooves 15d are schematically depicted in the drawings. In practice, the thrust grooves 15d are arranged in the same manner s the thrust grooves 15b so that the width of each thrust groove 15d is substantially the same as the interval between adjacent thrust grooves 15d.

As can be seen in Figure 1, a substantially inverted truncated conical recess is formed in the central portion of the bottom rotor 17. A central hole 19 which is to be engaged with the upper, outer circumference of the stationary shaft 13 is formed in the bottom of the recess. Three-stepped annular portions 20, 21 and 22 each of which is coaxial with the central hole 19 are formed on the flank of the recess.

The flange disk 15 is fitted in the stepped portion 20 and a flanged portion of a thrust retaining portion 18 is fitted in the stepped portion 21. Furthermore, an annular magnet 23 for chucking is fitted in the thrust retaining portion 18 with the outer circumferential portion of the magnet 23 fitted in the stepped portion 22.

With such an arrangement, the rotary member composed of the bottom rotor 17 and so on may be born in the axial direction by the thrust dynamic pressure bearing portions 15a and 15c and may be born in the radial direction by the radial dynamic pressure bearing 15f.

As shown in Figure 5, gaps 24 are formed between the thrust dynamic pressure bearing portions 15a and 15c and the rotary member, whereas a gap 30 is formed between the radial dynamic pressure bearing portion 15f and the rotary member.

As shown in Figure 5, oil that has been fed through the oil feed hole 16 fills the gaps 24 and 30. Overflow oil is received in an annular oil sum 27 which has a recessed cross-section provided in the central top portion of the stationary base 11. The oil sump 27 is a reservoir for overflow oil. After the oil is charged or replenished, the opening of the oil feed hole 16 is covered by the sealing cover 14.

As shown in Figure 1, the oil sump 27 is in fluid communication with the space 29 for preventing oil leakage. The space 29 is slanted at its central portion and its opening area is gradually increased in the radial outward direction.

A stator 26 formed by windings around an iron core is mounted on an outer circumferential of the stationary base 11 at a position facing the magnet 28 which is mounted on the inner circumferential surface of the bottom rotor 17.

The operation of the above mentioned embodiment will now be described.

When the rotary member composed of the bottom rotor 17 and the thrust retaining portion 18 is at a standstill, the inner circumferential surface (which is the surface to be born) of the rotary member is in contact with the surfaces of the thrust dynamic pressure bearings 15a and 15c and the radial dynamic pressure bearing 15f. For this reason, the gaps 24 and 30 are not kept constant but there are the wide and narrow portions.

Consequently, when the rotary member starts to rotate, due to the viscosity of the oil in the gaps 24 and 30, the oil is entrained and compressed in the narrow portions of the gaps 24 and 30 and the pressure of the oil therefore increases. The pressure is such as to balance the weight of the rotary member so as to support the rotary member and oil films are formed in the gaps 24 and 30.

Thus, the rotary member composed of the bottom rotor 17 and the thrust retaining portion 18 is supported in a non-contact state with the radial dynamic pressure bearings 15a and 15c and the radial dynamic pressure bearing portion 15f as a result of the dynamic pressure generated by the rotation of the rotary member.

As described above, in this embodiment, a plurality of thrust grooves 15b and 15d are formed on the top and bottom surfaces of the flange disk 15 to form the thrust dynamic pressure bearing portions 15a and 15c. A plurality of radial grooves 15e are formed on the outer circumference of the flange disk 15 to form the radial dynamic pressure bearing portion 15f.

For this reason, as shown in Figure 2, a radial width R1 of the radial dynamic pressure bearing portion 15f is greater than the radial width R2 of the conventional radial dynamic pressure bearing shown in Figure 6. Accordingly, even if its height L1 is decreased, it is possible to ensure sufficient rigidity to support the rotation of the bottom rotor 17. Thus, according to this embodiment, it is possible to reduce the overall height of the dynamic pressure bearing when the rotary member is miniaturised or flattened.

If it is impossible to ensure sufficient rigidity with a height only of L1 for the radial dynamic pressure bearing portion 15f; in order to compensate for the deficient rigidity, as shown in Figure 2, it is possible to apply a radial dynamic pressure bearing 15a having a vertical height L2 to the upper portion of the stationary shaft 13. In this case, the height L2 may be rather shortened in comparison with a height L3 of the conventional radial dynamic pressure bearing shown in Figure 6, so that the relationship, (L1+L2) <L3, is established. Accordingly, it is possible to reduce the overall height of the dynamic pressure bearing much more than in the conventional arrangement.

In this embodiment, since the thrust dynamic pressure bearing portions 15a and 15c and the radial dynamic pressure bearing portion 15f are formed integrally in the flange disk 15, the precision of a right angle between these portions can be improved.

Furthermore, in this embodiment, since the thrust dynamic pressure bearing portions 15a and 15c and the radial dynamic pressure bearing portion 15f are formed integrally in the flange disk 15 and the overall height of the dynamic bearing is shortened, it is possible to receive a relatively large lower portion of the stationary shaft 13 into the central hole 12 of the base 11. As a result of this, the mounting strength of the stationary shaft 13 is increased.

In this embodiment, the thrust grooves 15b and 15d are formed for the thrust dynamic pressure bearing portions 15a and 15c and the radial grooves 15e are formed for the radial dynamic pressure bearing portion 15f. Instead thereof, it is however possible to provide grooves in the surfaces, to be born, of the bottom rotor 17, and also to provide the grooves in both the bearing portion and the bearing surface to be born.

In this embodiment, although an explanation has been given in relation to dynamic pressure bearings in which the gaps 24 and 30 are filled with oil, it is possible to apply the present invention to a dynamic pressure pneumatic bearing in which no oil is used.

Furthermore, in this embodiment, although an explanation has been given with respect to the dynamic pressure bearings in which the flange disk 15 is fixed to the stationary base 11, it is possible to apply the present invention to a dynamic pressure bearing in which the flange disk 15 rotates.

When the rotary member comprising the bottom rotor 17 is stationary, oil within the oil sump 27 is raised up to the lower portion of the space 29 by capillary action.

On the other hand, upon rotation of the bottom rotor 17, the centrifugal force caused by the bottom rotor 17 is applied to the oil that has been raised to the lower portion within the space 29 so that the oil is likely to be moved to the outside.

However, as shown in Figure 1, the opening area is gradually increased in the radially outward direction. Accordingly, in the space 29, the action tending to raise the oil by centrifugal force is weakened, so that the oil within the space 29 is only somewhat raised, and there is no fear of leakage to the outside.

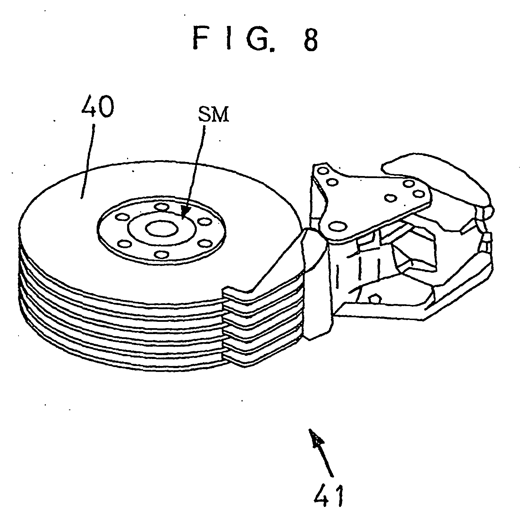

Figure 8 shows an external view of a rotary apparatus 41 using a spindle motor which includes the dynamic pressure bearing device hereof. This rotary apparatus 41 is a disk drive, constructed by fitting a rotary portion 40 like a magnetic disk, an optical disk, polygon mirror or the like to the rotary member 17 as shown in Figure 1 of the spindle motor SM.

As described above according to the present invention, a space having a lower portion slanted downwardly and radially inward towards the centre portion is formed for preventing oil leakage. The opening area of this space is gradually increased in the radially outward direction so that oil leakage from the oil sump does not occur.

Further, as have been described above, the top and bottom surfaces of the bearing disk are used as thrust dynamic pressure bearing portions for supporting the rotary member in the axial direction, whereas the outer circumferential surface of the disk is used as the radial dynamic pressure bearing portion for supporting the rotary member in the radial direction.

Thus, according to the present invention, it is possible to increase the radial length of the radial dynamic pressure bearing portion in comparison with the conventional bearing. Accordingly, even if its height is reduced, it is possible to obtain sufficient rigidity to support the rotary member. Hence, in order to miniaturise and flatten the rotary member to be born, it is possible to reduce the overall height of the dynamic pressure bearing while maintaining sufficient rigidity.

The aforegoing description has been given by way of example only and it will be appreciated by a person skilled in the art that modifications can be made without departing from the scope of the present invention.

## Claims

1. A dynamic pressure bearing device comprising a bearing disk (15) fixed to a stationary portion (13), wherein the disk (15) has a top surface which forms a thrust dynamic pressure bearing portion (15a) for supporting a rotary member (17, 18) in an axial direction, and the disk (15) has an outer circumferential surface which forms a radial dynamic pressure portion (15f) for supporting said rotary member (17, 18) in a radial direction, **characterised in that** the said disk (15) has a bottom surface which forms a thrust dynamic pressure bearing portion (15c) for supporting the rotary member (17, 18) in an axial direction and **in that** a plurality of grooves (15d) are formed in said disk bottom surface.

2. A dynamic pressure bearing device as claimed in claim 1, **characterised in that** the top surface of said disk (15) has a plurality of grooves (15b) formed therein, and the outer circumferential surface of said disk (15) has a plurality of grooves (15e) formed therein.

3. A dynamic pressure bearing device as claimed in claim 1, further comprising a space (29) in fluid communication with a gap (24, 30) formed between the rotary member (17, 18) and the bearing disk (15) and the stationary portion (13), the space (29) being formed between the rotary member and a stationary base (11) and having a central portion slanted downwardly in the radially inward direction:
**characterised in that** an opening area of the said space (29) increases in the radially outward direction.

4. A dynamic pressure bearing device as claimed in claim 1, **characterised in that** the grooves (15b, 15d, 15e) are chevron-shaped in the respective surface.

5. A spindle motor **characterised by** a dynamic pressure bearing device as claimed in any preceding claim.

6. A rotary apparatus **characterised by** a spindle motor as claimed in claim 5.

## Patentansprüche

1. Dynamische Drucklagervorrichtung, umfassend eine an einem stationären Abschnitt (13) festgelegte Lagerscheibe (15), wobei die Scheibe (15) eine obere Oberfläche aufweist, welche einen dynamischen Axialdrucklagerabschnitt (15a) zum Lagern eines Drehteils (17, 18) in einer axialen Richtung bildet, und wobei die Scheibe (15) eine äußere Umfangsoberfläche aufweist, welche einen dynamischen Radialdrucklagerabschnitt (15f) zum Lagern des Drehteils (17, 18) in einer radialen Richtung bildet, **dadurch gekennzeichnet, dass** die Scheibe (15) eine untere Oberfläche aufweist, welche einen dynamischen Axialdrucklagerabschnitt (15c) zum Lagern des Drehteils (17, 18) in einer axialen Richtung bildet, und dass eine Mehrzahl von Nuten (15d) in der unteren Oberfläche der Scheibe ausgebildet sind.

2. Dynamische Drucklagervorrichtung nach Anspruch 1, **dadurch gekennzeichnet, dass** die obere Oberfläche der Scheibe (15) eine Mehrzahl von darin ausgebildeten Nuten (15b) aufweist und die äußere Umfangsoberfläche der Scheibe (15) eine Mehrzahl von darin ausgebildeten Nuten (15e) aufweist.

3. Dynamische Drucklagervorrichtung nach Anspruch 1, ferner umfassend einen Raum (29) in Fluidverbindung mit einem Spalt (24, 30), der zwischen dem Drehteil (17, 18) und der Lagerscheibe (15) und dem stationären Abschnitt (13) gebildet ist, wobei der Raum (29) zwischen dem Drehteil und einer stationären Basis (11) gebildet ist und einen mittleren Abschnitt aufweist, der in der Richtung nach radial einwärts nach unten geneigt ist, **dadurch gekennzeichnet, dass** ein Öffnungsbereich des Raums (29) sich in der Richtung nach radial auswärts vergrößert.

4. Dynamische Drucklagervorrichtung nach Anspruch 1, **dadurch gekennzeichnet, dass** die Nuten (15b, 15d, 15e) zickzack-artig in der jeweiligen Oberfläche vorgesehen sind.

5. Spindelmotor, **gekennzeichnet durch** eine dynamische Drucklagervorrichtung nach einem vorangehenden Anspruch.

6. Drehvorrichtung, **gekennzeichnet durch** einen Spindelmotor nach Anspruch 5.

## Revendications

1. Dispositif de roulement à pression dynamique comprenant un disque de roulement (15) fixé à une partie stationnaire (13) dans lequel le disque (15) comporte une surface supérieure qui forme une partie (15a) de roulement à pression dynamique de poussée pour supporter un élément rotatif (17, 18) dans une direction axiale, et le disque (15) comporte une surface de circonférence externe qui forme une partie (15f) de pression dynamique radiale pour supporter ledit élément rotatif (17, 18) dans une direction radiale, **caractérisé en ce que** ledit disque (15) comporte une surface de fond qui forme une partie (15c) de roulement à pression dynamique de poussée pour supporter l'élément rotatif (17, 18) dans une direction axiale et **en ce que** une pluralité de rainures (15d) sont formées dans ladite surface de fond du disque.

2. Dispositif de roulement à pression dynamique selon la revendication 1, **caractérisé en ce que** la surface supérieure dudit disque (15) comporte une pluralité de rainures (15b) formées dans celle-ci, et **en ce que** la surface circonférentielle externe dudit disque (15) comporte une pluralité de rainures (15e) formées dans celle-ci.

3. Dispositif de roulement à pression dynamique selon la revendication 1, comprenant en outre un espace (29) en communication fluidique avec un intervalle (24,30) formé entre l'élément rotatif (17, 18) et le disque de roulement (15) et la partie stationnaire (13), l'espace (29) étant formé entre l'élément rotatif et une base stationnaire (11) et ayant une partie centrale inclinée vers le bas dans la direction interne radiale : **caractérisé en ce que** une zone d'ouverture dudit espace (29) augmente dans la direction externe radiale.

4. Dispositif de roulement à pression dynamique selon la revendication 1, **caractérisé en ce que** les rainures (15b, 15d, 15e) sont en forme de chevron dans la surface respective.

5. Moteur à fuseau **caractérisé par** un dispositif de roulement à pression dynamique selon l'une quelconque des revendications précédentes.

6. Appareil rotatif **caractérisé par** un moteur à fuseau selon la revendication 5.
